**Europäisches Patentamt**

**European Patent Office**

**Office européen des brevets**

(19)

(11) Publication number: **0 039 176**
**B1**

(12) **EUROPEAN PATENT SPECIFICATION**

(45) Date of publication of patent specification: **12.09.84**

(51) Int. Cl.³: **B 60 R 21/10**

(21) Application number: **81301669.8**

(22) Date of filing: **15.04.81**

(54) **Passive safety belt system.**

(30) Priority: **30.04.80 GB 8014198**
**13.05.80 GB 8015857**
**12.09.80 GB 8029601**
**08.10.80 GB 8032288**

(43) Date of publication of application:
**04.11.81 Bulletin 81/44**

(45) Publication of the grant of the patent:
**12.09.84 Bulletin 84/37**

(84) Designated Contracting States:
**DE FR GB IT SE**

(56) References cited:
**DE-A-2 214 776**
**FR-A-2 159 748**
**FR-A-2 407 002**
**US-A-3 727 944**
**US-A-4 189 170**
**US-A-4 201 401**

(73) Proprietor: **BRITAX (WINGARD) LIMITED**
**Chandler Road**
**Chichester Sussex, PO19 2UG (GB)**

(72) Inventor: **Cunningham, Douglas James**
**"Sambourne" 4 Church Close Dunton Bassett**
**Lutterworth Leicestershire (GB)**
Inventor: **Sanders, George Geoffrey**
**8 Chaytor Road**
**Polesworth North Warwickshire (GB)**

(74) Representative: **Hollinghurst, Antony**
**Britax Central Services 40 Granby Avenue**
**Garretts Green Birmingham, B33 0SJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a motor vehicle having a fascia forward of its steering wheel, a seat located adjacent to a front hinged door and a passive safety belt system comprising a shoulder strap, a lap strap and a common strap interconnected to form a three-point safety belt, the free ends of the shoulder and lap straps being connected to the rear edge of the vehicle door in proximity to the top and bottom corners thereof respectively and the common strap being guided, at a location on the vehicle inboard of and adjacent to the bottom of the back of the seat, on to an inertia reel, and puller means interconnecting a point on the safety belt with a point on the vehicle.

GB—A—1412013 discloses a passive safety belt system of this type. The puller means is connected to a traveller mounted on a track on the vehicle door. The present invention avoids the need for such a traveller and track.

According to the invention, in a system of this type, the puller means is fastened to a point on the safety belt which is inboard of the seat when the door is closed and connects the said point to a point on the vehicle in front of and above the normal position of the knees of an occupant of the seat and closely adjacent to the fascia when the door is opened, thereby to displace the junction between the lap, shoulder and common straps out of the plane containing the rear edge of the vehicle door and the location in a direction away from the seat.

The point on the vehicle to which the puller means is connected may be a fixed location on the fascia immediately below the windscreen. Alternatively, the point may be movable, for example in the form of a slider mounted on a track, the end of which nearer to the door is higher than the other end, or the end of an arm mounted on a transverse pivot axis, the end of which nearer the door is lower than the other end.

In a preferred form of the invention the lap and shoulder straps are formed as a single continuous length running freely through a guide member which is attached to the end of the common strap, and the puller means comprises a flexible element running freely through the guide member and attached to the shoulder strap at a point spaced from the guide member. The guide member may comprise a ring which need not be circular. Alternatively, it may be a more complex component having separate apertures for the lap and shoulder straps and the puller member respectively.

Embodiments of the invention will now be described, by way of example, with reference to the accompanying drawings, in which:

Figures 1 and 2 are perspective views of the interior of a motor car in accordance with a first embodiment of the invention, with the door adjacent to the seat provided with the safety belt closed and open respectively;

Figures 3 and 4 are perspective views, corresponding to Figures 1 and 2, of a second embodiment of the invention,

Figures 5 and 6 are perspective views, corresponding to Figures 1 and 2, of a third embodiment of the invention;

Figures 7 and 8 are perspective views, corresponding to Figures 1 and 2, of a fourth embodiment of the invention;

Figures 9 and 10 are perspective views, illustrating two alternative forms of guide member for use with the embodiment shown in Figures 7 and 8; and

Figures 11 and 12 are perspective views, corresponding to Figures 1 and 2, of a fifth embodiment of the invention.

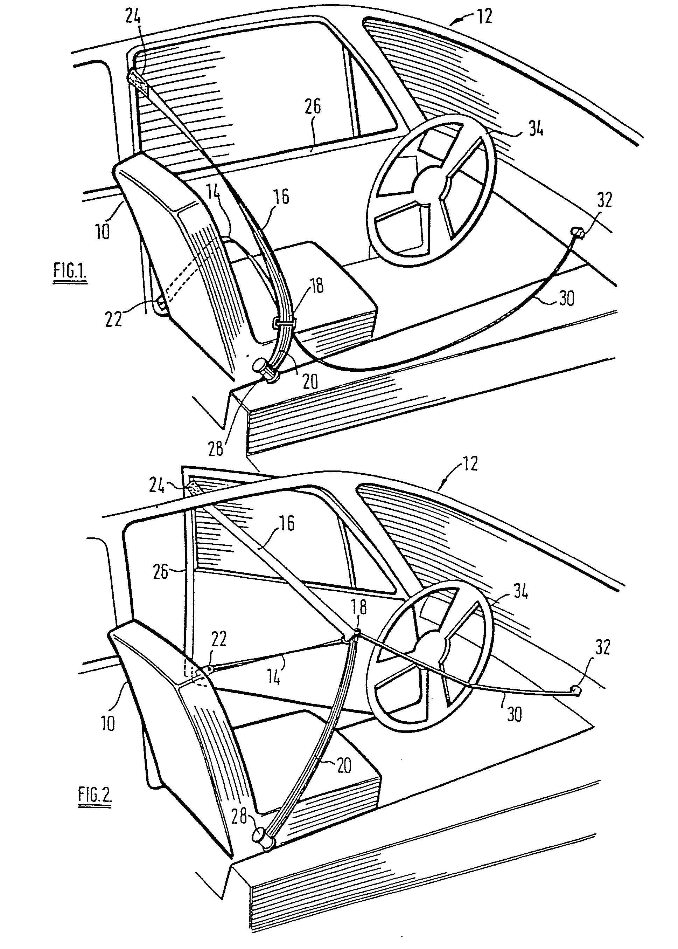

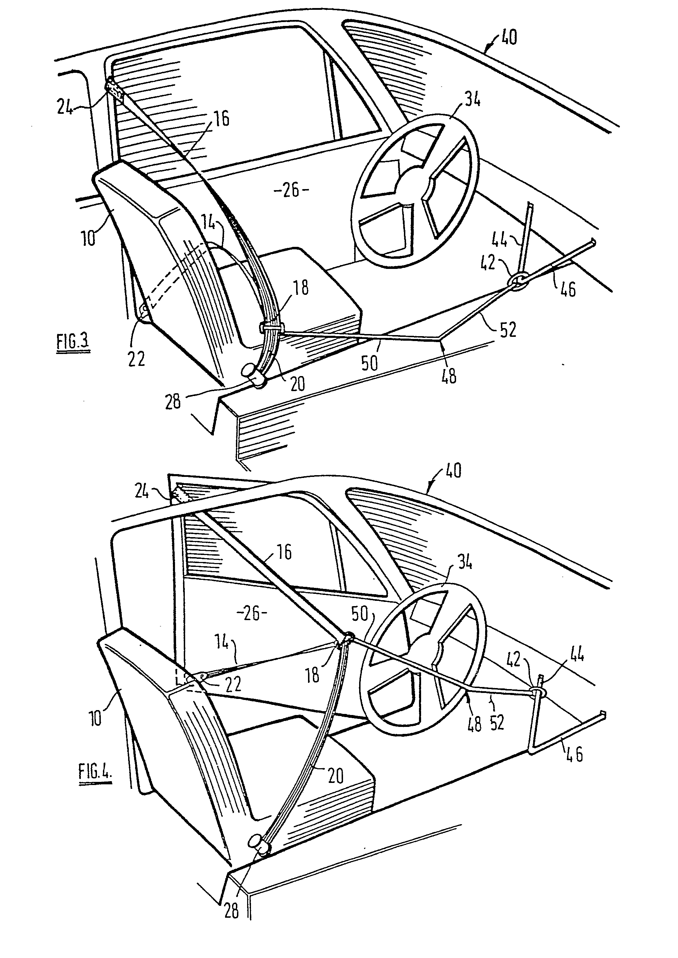

Figures 1 and 2 show the driver's seat 10 of a motor car 12 in accordance with the invention. A safety belt for the driver consists of a single length of webbing, forming the lap element 14 and the diagonal element 16 which runs freely through a flattened ring 18 connected to one end of another length of webbing forming the common element 20 of the safety belt. The free ends of the lap and diagonal elements 14 and 16 are connected to respective anchorages 22 and 24 near the bottom and top rear corners of the adjacent door 26 of the car. The free end of the common element 20 is connected to an inertia reel 28 mounted on the floor of the car on the inboard side of the seat 10 and adjacent to the back thereof.

In accordance with the invention, a piece of webbing 30 is connected between a point on the common element 20 adjacent to the ring 18 and a point 32 in the centre of the fascia just below the windscreen. The length of the webbing 30 is chosen so that it hangs in a position so as not to obstruct access to the handbrake and gear lever (not shown).

When the car door 26 is closed, the safety belt comprising the elements 14, 16 and 20 is in a configuration to be used by the driver of the car 12 and is not affected by the piece of webbing 30. When the door 26 is opened the resulting pull on the lap and diagonal elements 14 and 16, particularly the latter, causes webbing to be drawn off the reel 28. Initially the piece of webbing 30 has no effect but, when it tightens, it pulls the ring 18 and the adjacent elements of the safety belt away from the body of the driver until, when the door 26 is fully open, the safety belt is in the configuration shown in Figure 2.

A similar system may be provided for the front seat passenger.

It will be appreciated that the choice of the length of the piece of webbing 30 is a compromise between not interfering with access to the handbrake and gear lever when the car door 26 is closed, which dictates that the length shall be as long as convenient, and maximising the extent to which the safety belt is pulled away from the body of the driver when the door 26 is open, which dictates that the length should preferably be no longer than the distance between the point 32 and the rim of the steering wheel 34. This compromise can be improved by replacing the fixed anchorage point 32 with a movable anchorage point.

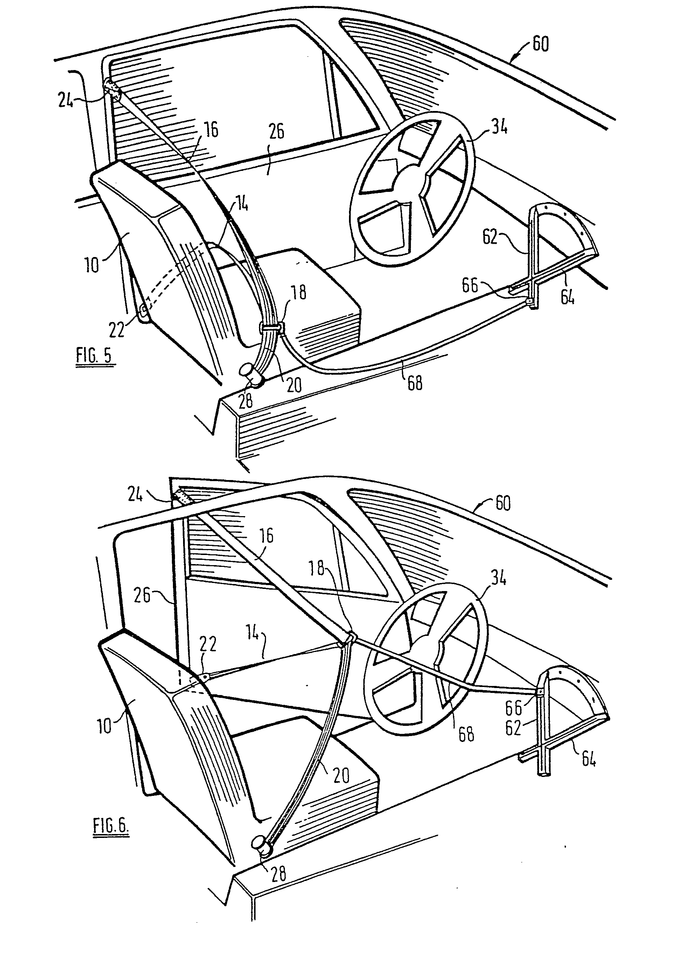

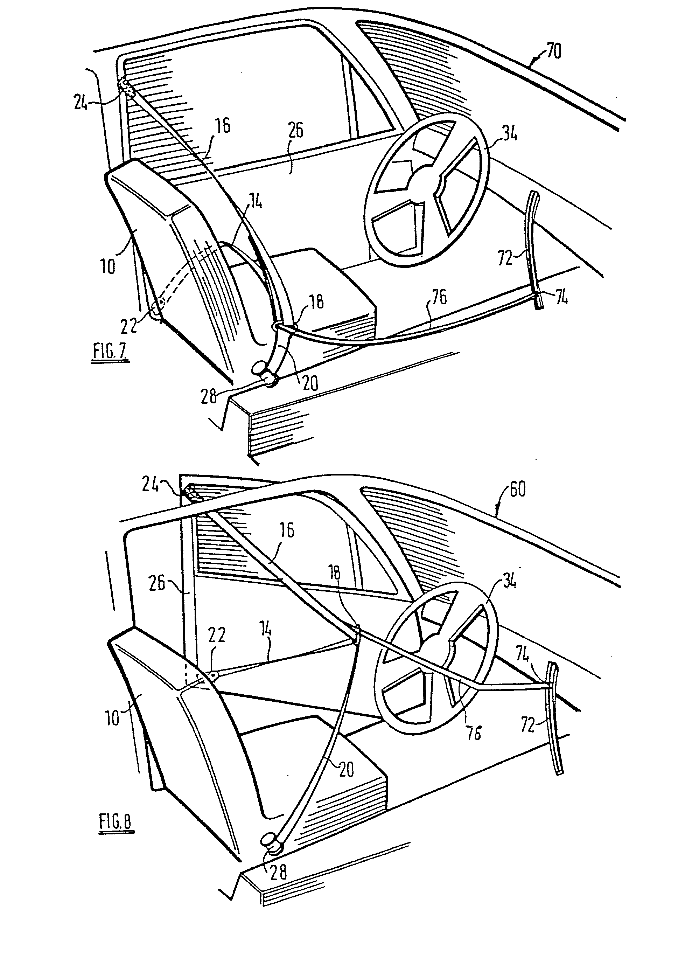

Figures 3 and 4 illustrate an alternative arrangement in which a movable anchorage point is provided, as applied to a car 40. Those parts of the system which are equivalent to corresponding parts of the system shown in Figures 1 and 2 are denoted by the same reference numerals and will not be described in detail.

The movable anchorage takes the form of a slider 42 mounted on a track member 44 which, together with a corresponding track member 46 of an equivalent system for the front passenger's seat (not shown) forms a V-shape projecting rearwardly and downwardly from the fascia. The slider 42 is connected to a point on the common element 20 of the safety belt adjacent to the ring 18 by a cranked rigid member 48 having a long limb 50 which, when the car door 26 is closed, as shown in Figure 3, extends substantially forwardly from the common element 20 and a short limb 52 which is attached to the slider 42.

When the car door 26 is opened, webbing is pulled off the reel 28 as before. The cranked member 48 is lifted up by the safety belt and the slider 42 travels along the track 44 until the cranked member 48 abuts against the steering wheel 34. The cranked member 48 then pivots on the edge of the steering wheel 34, to bring the short limb 52 thereof to a more horizontal orientation with the result that the end of the long limb 50 which is attached to the safety belt is drawn forwardly towards the steering wheel. Thus the cranked configuration of the member 48 serves both to improve access to the handbrake and gear lever (not shown) and to increase the distance by which the safety belt is drawn away from the body of the driver.

The rigid member 48 may be replaced by a piece of webbing or other flexible connecting material if desired. Similarly, a rigid member may be used with the system of Figures 1 and 2.

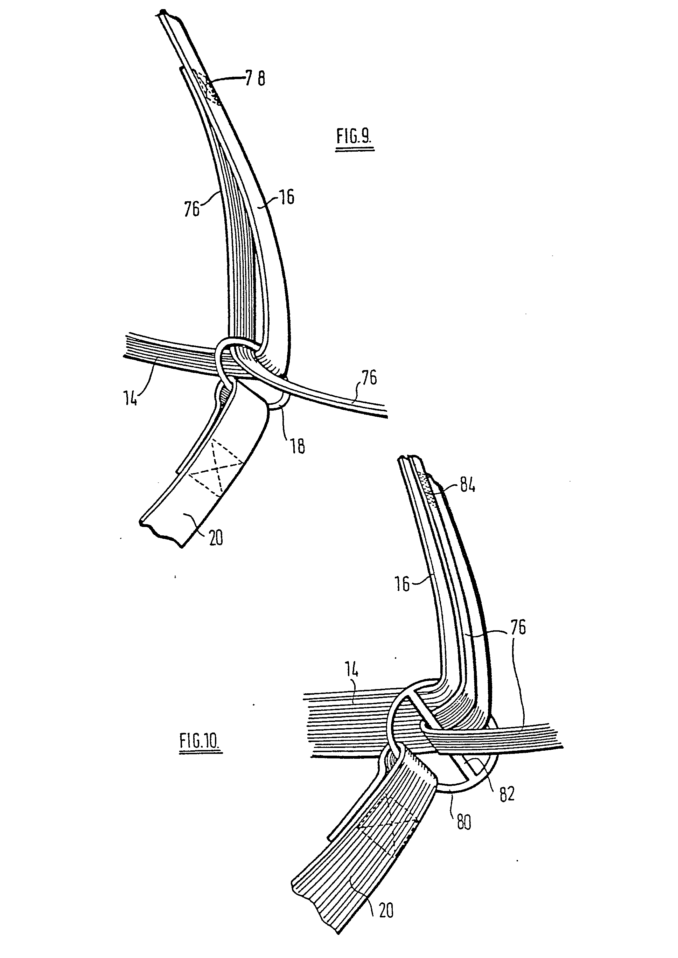

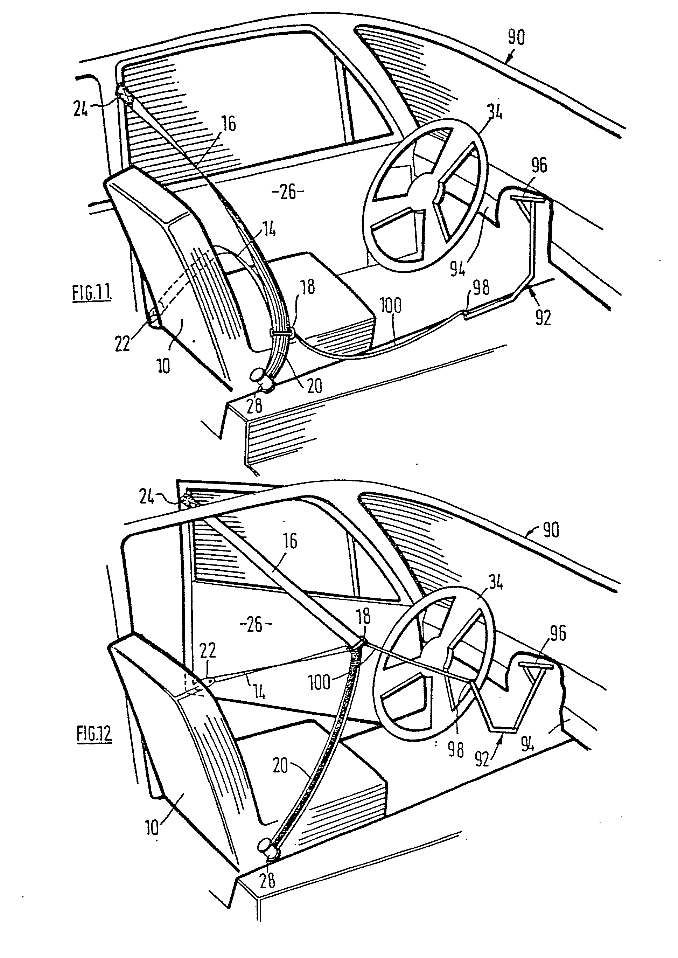

Figures 5 and 6 illustrate a car 60 fitted with another system in accordance with the invention. Once again, those parts which are equivalents to parts of the system shown in Figures 1 and 2 are denoted by the same reference numerals and will not be described in detail.

The V-shaped track arrangement, 44, 46 of the system shown in Figures 3 and 4 is replaced by an S-shaped track arrangement consisting of track members 62 and 64. The track member 62 carries a slider 66 which is connected by a piece of webbing 68 to the common element 20 of the safety belt adjacent to the ring 18. The track member 64 carries a slider (not shown) for a corresponding system for the front passenger's seat. The operation of the system is similar to that of the system shown in Figures 3 and 4. The crossing track members 62 and 64 not interfering with the operation because the webbing 68 extends from the slider 66 approximately in the plane of the X-shape.

The webbing 68 may be replaced by a rigid member suitably shaped to avoid interfering with the track member 64.

Figures 7, 8 and 9 illustrate a car 70 fitted with a further system in accordance with the invention. Once again, those parts which are equivalent to corresponding parts of the system shown in Figures 1 and 2 are denoted by the same reference numerals and will not be described in detail.

The V-shaped track arrangement 44, 46 of the system shown in Figures 3 and 4 is replaced by a similar track arrangement, consisting of two track members of which only the track member 72 is illustrated. The track member 72 is curved so that although its upper end region follows substantially the same path as that of the track member 44, its lower end region is displaced forwardly so as not to project as far back in the car towards the seats. The track member 72 carries a slider 74 which is connected to a piece of webbing 76. The piece of webbing 76 is threaded through the ring 18 and stitched to the diagonal element 16 at a point 78 (Figure 9) which is spaced apart from the ring 18.

When the door 26 is fully open, as shown in Figure 8, the piece of webbing 76 pulls some of the diagonal element 16 through the ring 18 so as to effectively increase the length of the lap element 14. This prevents the lap element 14 from pulling the ring 18 downwards, with the result that it is located substantially on a straight line between the slider 74 and the anchorage 24 at the top rear corner of the door 26 (compare Figure 6).

Figure 9 shows the parts of the safety belt immediately adjacent to the ring in more detail, with the door in a half open position. It will be seen that the flexible element 76 is stitched to the side of the diagonal element 16 which faces the user's body so as to be appropriately positioned to run through the ring 18 without interfering with the co-operation between the latter and the three elements 14, 16 and 20 of the safety belt when the door is closed.

Figure 10 illustrates an alternative guide member 80 for connecting the three elements of the safety belt and the piece of webbing 76 for use in place of the ring 18. The guide member 80 consists of a ring having a cross-bar 82 thereby providing three separate transverse elements round which the lap and diagonal elements 14 and 16, the common element 20 and the piece of webbing 76 can be led. This allows the piece of webbing 76 to be stitched, at a point 84, on the opposite side to that of the user's body in use.

Figures 11 and 12 illustrate a car 90 fitted with another system in accordance with the invention. Once again, those parts which are equivalent to corresponding parts of the system shown in Figures 1 and 2 are denoted by the same reference numerals and will not be described in detail.

The curved track members of the system shown in Figures 7 and 8 are replaced by a cranked lever 92 which is pivotally mounted beneath the fascia 94 of the car 90. The fascia 94 is shown broken away and, as can be seen, the axle 96 on which the lever 92 is mounted extends generally transversely of the car 90 but its end nearer the door 26 is lower than its other end. The effect of this is that, as the lever 92 pivots upwardly from the position shown in Figure 11 to the position shown in Figure 12, its outer end 98 moves closer to the door 26. The free end 98 of the lever 92 is connected to the ring 18 by a piece of webbing 100, similar to the piece of webbing 76 of Figures 7 and 8. Preferably, the piece of webbing 100 extends through the ring 18 and is stitched to the diagonal element 16 at a point spaced apart from the ring 18, in a similar manner to that described with reference to Figures 9 or 10.

When the door 26 is opened, the diagonal element 16 of the safety belt pulls on the piece of webbing 100 which in turn pulls on the free end 98 of the lever 92. Because of the downward slope of the axle 96, the piece of webbing 100 exerts a force on the lever 92 with a sufficient component in a direction perpendicular to the axle 96 for the lever 92 to be lifted from the position shown in Figure 11 to the position shown in Figure 12. The cranked formation of the lever 92 enables it to perform this movement without being obstructed by the fascia 94. The free end 98 of the lever 92 thus follows a similar path to that of the slider 74 of Figures 7 and 8 but the system shown in Figures 11 and 12 has the advantage that it can be installed without requiring any modification of the fascia 94.

## Claims

1. A motor vehicle having a fascia forward of its steering wheel (34), a seat (10) located adjacent to a front hinged door (26) and a passive safety belt system comprising a shoulder strap (16), a lap strap (14) and a common strap (20) interconnected to form a three-point safety belt, the free ends of the shoulder and lap straps being connected to the rear edge of the vehicle door (22) in proximity to the top and bottom corners thereof respectively and the common strap (20) being guided, at a location (28) on the vehicle inboard of and adjacent to the bottom of the back of the seat (10), on to an inertia reel (28), and puller means (30, 48, 76, 100) interconnecting a point on the safety belt with a point on the vehicle, characterised in that the puller means (30, 48, 76, 100) is fastened to a point (18) on the safety belt which is inboard of the seat when the door is closed and connects the said point (18) to a point (32, 42, 66, 74, 98) on the vehicle in front of and above the normal position of the knees of an occupant of the seat (10) and closely adjacent to the fascia when the door (26) is opened, thereby to displace the junction (18) between the lap, shoulder and common straps out of the plane containing the rear edge of the vehicle door (26) and the location (28) in a direction away from the seat (10).

2. A safety belt system according to claim 1, characterised in that the length of the puller means (30, 48, 68, 76, 100) between the point (18, 78, 84) on the safety belt and the point (32, 42, 66, 74, 98) on the vehicle is constant.

3. A safety belt system according to claim 1 or 2, characterised in that the point on the vehicle to which the puller means (30) is connected comprise a fixed location (32) on the fascia immediately below the windscreen.

4. A safety belt system according to claim 1 or 2, characterised in that the point on the vehicle to which the puller means (48, 68, 76) is connected comprises a slider (42, 66, 74) mounted on a track (42, 62, 72) which is fixed to the vehicle with the end nearer to the door (26) higher than the other end.

5. A safety belt system according to claim 1 or 2, characterised in that point (98) on the vehicle to which the puller means is connected comprises the outboard end of an arm (92) which is mounted on the vehicle for movement about a transverse pivot axis (96) the end of which near to the door (26) is lower than the other end.

## Revendications

1. Véhicule automobile comportant un entablement en avant de son volant de direction (34), un siège (10) situé près d'une porte articulée à l'avant (26) et un système de ceinture de sécurité passive comportant une courroie d'épaule (16), une courroie ventrale (14) et une courroie commune (20) reliées les unes aux autres pour former une ceinture de sécurité trois points, les extrémités libres des courroies d'épaule et ventrale étant reliées au bord arrière de la porte (26) du véhicule à proximité respectivement des coins supérieur et inférieur de celle-ci et la courroie commune (20) étant guidée, en un endroit (28) du véhicule situé à l'intérieur par rapport au siège (10) et au voisinage du bas du dossier de ce dernier, jusque sur un enrouleur à inertie (28), et un moyen de traction (30, 48, 76, 100) reliant entre eux un point de la ceinture de sécurité et un point du véhicule, caractérisé en ce que le moyen de traction (30, 48, 76, 100) est fixé à un point (18) de la ceinture de sécurité qui est situé à l'intérieur par rapport au siège que la porte est fermée et relie ledit point (18) à un point (32, 42, 66, 74, 98) du véhicule situé en avant et au-dessus de l'emplacement normal des genoux de l'occupant du siège (10) et étroitement voisin de l'entablement, de façon à la déplacer, quand on ouvre la porte, la jonction (18) entre les courroies ventrale, d'épaule et commune hors du plan passant par le bord arrière de la porte (26) du véhicule et par l'endroit (28) en l'écartant du siège (10).

2. Système de ceinture de sécurité selon la revendication 1, caractérisé en ce que la longueur présentée par le moyen de traction (30, 48, 68, 76, 100) entre le point (18, 78, 84) de la ceinture de sécurité et le point (32, 42, 66, 74, 98) du véhicule est constante.

3. Système de ceinture de sécurité selon la revendication 1 ou 2, caractérisé en ce que le point du véhicule auquel est relié le moyen de traction (30) est un endroit fixe (32) de l'entablement situé immédiatement au-dessous du pare-brise.

4. Système de ceinture de sécurité selon la revendication 1 ou 2, caractérisé en ce que le point du véhicule auquel est relié le moyen de traction (48, 68, 76) est un curseur (42, 66, 74) monté sur une glissière (42, 62, 72) qui est fixé au véhicule avec disposition de son extrémité la plus voisine de la port (26) plus haut que l'autre extrémité.

5. Système de ceinture de sécurité selon la revendication 1 ou 2, caractérisé en ce que le point (98) du véhicule auquel est relié le moyen de traction est l'extrémité extérieure d'un bras (92) qui est monté sur le véhicule de façon à se déplacer autour d'un axe d'articulation transversal (96) dont l'extrémité voisine de la porte (26) est située plus bas que l'autre extrémité.

**Patentansprüche**

1. Kraftfahrzeug mit einer Instrumententafel vor seinem Lenkrad (34), einem Sitz (10), der neben einer vorn angelenkten Tür (26) angeordnet ist, und mit einem passiven Sicherheitsgurtsystem, bestehend aus einem Schulterband (16), einem Wickelband (14) und einem gemeinsamen Band (20), die zur Bildung eines Dreipunktsicherheitsgurtes miteinander verbunden sind, wobei die Enden des Schulter- und des Wickelbandes mit dem hinteren Rand der Fahrzeugtür (26) jeweils in der Nähe von deren oberen und unteren Ecke verbunden sind und wobei das gemeinsame Band (20) an einer Stelle (28) des Fahrzeugs, die nach innen gerichtet und neben der Unterseite der Rückenlehne des Sitzes (10) liegt, auf einer Trägheitsrolle (28) geführt ist, und aus einer Zugeinrichtung (30, 48, 76, 100), die eine Stelle des Sicherheitsgurtes mit einer Stelle des Fahrzeugs verbindet, dadurch gekennzeichnet, daß die Zugeinrichtung (30, 48, 76, 100) an einer Stelle (18) des Sicherheitsgurtes befestigt ist, die bei geschlossener Tür von dem Sitz nach innen gerichtet ist und die die Stelle (18) mit einer Stelle (32, 42, 66, 74, 98) an dem Fahrzeug vor und oberhalb der normalen Stellung der Knie eines Benutzers des Sitzes (10) und dicht neben der Instrumententafel verbindet, wenn die Tür (26) geöffnet ist, um dadurch die Verbindungsstelle (18) zwischen dem Wickelband, dem Schulterband und dem gemeinsamen Band aus der Ebene, die den hinteren Rand der Fahrzeugtür (26) und die Stelle (28) enthält, in eine Richtung von dem Sitz weg (10) zu verlagern.

2. Sicherheitsgurtsystem nach Anspruch 1, dadurch gekennzeichnet, daß die Länge der Zugeinrichtung (30, 48, 68, 76, 100) zwischen der Stelle (18, 78, 84) an dem Sicherheitsgurt und der Stelle (32, 34, 36, 74, 98) des Fahrzeugs konstant ist.

3. Sicherheitsgurtsystem nach Anspruch 1 oder 2, dadurch gekennzeichnet, daß die Stelle an dem Fahrzeug, an der die Zugeinrichtung (30) angeschlossen ist, einen festen Platz (32) an der Instrumententafel unmittelbar unterhalb der Windschutzscheibe besitzt.

4. Sicherheitsgurtsystem nach Anspruch 1 oder 2, dadurch gekennzeichnet, daß die Stelle an dem Fahrzeug, an der die Zugeinrichtung (48, 68, 76) angeschlossen ist, ein Gleitstück (42, 66, 74) aufweist, das auf einer Schiene (44, 62, 72) montiert ist, welche an dem Fahrzeug befestigt ist, wobei das der Tür (26) näherliegende Ende höher also das andere Ende angeordnet ist.

5. Sicherheitsgurtsystem nach Anspruch 1 oder 2, dadurch gekennzeichnet, daß die Stelle (98) an dem Fahrzeug, an der die Zugeinrichtung angeschlossen ist, das nach außen gerichtete Ende eines Arms (92) aufweist, der an dem Fahrzeug um eine querliegende Schwenkachse (96) bewegbar montiert ist, deren näher zu der Tür (26) liegendes Ende niedriger als das andere Ende angeordnet ist.

FIG.1.

FIG.2

FIG.3

FIG.4.

2

FIG. 5

FIG.6.

FIG. 7

FIG. 8

4

FIG.9.

FIG.10.

FIG.11

FIG.12